(19) **Europäisches Patentamt**
**European Patent Office**
**Office européen des brevets**

(11) **EP 1 055 175 B1**

(12) **EUROPEAN PATENT SPECIFICATION**

(45) Date of publication and mention
of the grant of the patent:
**15.06.2011 Bulletin 2011/24**

(51) Int Cl.:
***G06F 12/08*** (2006.01)

(21) Application number: **99963502.2**

(22) Date of filing: **13.12.1999**

(86) International application number:
**PCT/EP1999/009822**

(87) International publication number:
**WO 2000/038068 (29.06.2000 Gazette 2000/26)**

(54) **CACHE WITH ACCESS TO A MOVING TWO-DIMENSIONAL WINDOW**

PUFFER-SPEICHER MIT ZUGRIFF AUF EIN VERSCHIEBBARES ZWEIDIMENSIONALES FENSTER

ANTEMEMOIRE AYANT ACCES A UNE FENETRE MOBILE A DEUX DIMENSIONS

(84) Designated Contracting States:
**DE FR GB**

(30) Priority: **22.12.1998 EP 98204381**

(43) Date of publication of application:
**29.11.2000 Bulletin 2000/48**

(73) Proprietor: **Trident Microsystems (Far East) Ltd.
Grand Cayman (KY)**

(72) Inventors:
• **BELLERS, Erwin, B.
NL-5656 AA Eindhoven (NL)**

• **DE LANGE, Alphonsius, A., J.
NL-5656 AA Eindhoven (NL)**

(74) Representative: **Epping - Hermann - Fischer
Patentanwaltsgesellschaft mbH
Postfach 20 07 34
80007 München (DE)**

(56) References cited:
**US-A- 5 602 984     US-A- 5 696 698**

EP 1 055 175 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a method of caching data-items for access in a sliding window. The invention also relates to a device for applying said method.

US patent No. 5,602,984 teaches a device with a cache memory for caching pixel data from a camera image. The device contains a main memory for storing the entire image and a cache memory that stores a small subset of the image. A processor addresses the cache memory with row and column (X,Y) addresses of pixels. The cache memory translates the (X,Y) address to an address inside the cache and accesses the addressed data. If data is read for a (X, Y) location that is not in the cache, the data is fetched from memory before it is returned to the processor.

In one example, the translation of (X,Y) addresses into cache addresses involves taking the X address and compounding it with a least significant part of the Y address. The check whether the addressed data is present in the cache is performed by comparing the most significant part of the Y address with a tag stored for the X address and the least significant part of the Y address.

During image processing access to pixels of the image is often restricted to a sliding window of pixels in the image. Such a window is scanned a number of times step by step along a row (X) direction, each scan for a different column (Y) position. The cache stores pixel data for a number of rows of pixels. When the window moves in along a number of X positions in the row direction only pixel data at those X positions for the latest row is not in the cache memory. This data is fetched and replaces the data at the same X positions for the earliest row in the cache memory. Thus, it is not necessary to fetch all data freshly from main memory in each scan along the row direction.

Amongst others, it is an object of the invention to reduce the amount of cache memory that is needed for storing data when access is restricted to a moving window in the image.

The method according to the invention is described in Claim 1. By making cache addresses available for reuse at a first X position in an earliest row, when data from a second X position in a latest row is fetched into the cache, where the first position trails the second X position, the earliest and latest row may both be in the same window. This is in contrast to US patent No. 5,602,984, where the earliest row should be outside the window, because data is replaced at an X-position for which new data is fetched, so that this X-position is still part of the X-position range of the window.

In one embodiment, the data for the second X position is stored at the cache address used for the data at the first X position. Thus a minimum of cache storage is affected by the window. However, this direct replacement is not necessary: if the cache is also used for caching other data besides the data for the window, making locations available for reuse provides room for these other purposes. In this case, the invention ensures that the data needed for the window occupies a minimal part of the cache. An associative cache, a set-associative cache or a direct mapped cache may be used for this purpose. In the case of a direct mapped cache there may of course still be cache conflicts with the other purposes, but the invention minimizes these conflicts.

In an embodiment of the invention, the window advances by a block of at least two rows between successive scans along rows. In this case, a first group of data-items extending over a first group of rows is made available for reuse and a second group of data-items extending over a second group of rows is fetched, where the first and second group have the size of a block and extend towards each other starting from the top and bottom of the window respectively.

When the window does not extend for an integer number of blocks in the column (Y) direction, the data-items from the first group will have been fetched at different times as part of different second groups.

These and other advantageous aspects of the invention will be described in the following using a number of figures, of which

  Figure 1 shows a device containing a cache memory
  Figure 2 shows an example of a window.

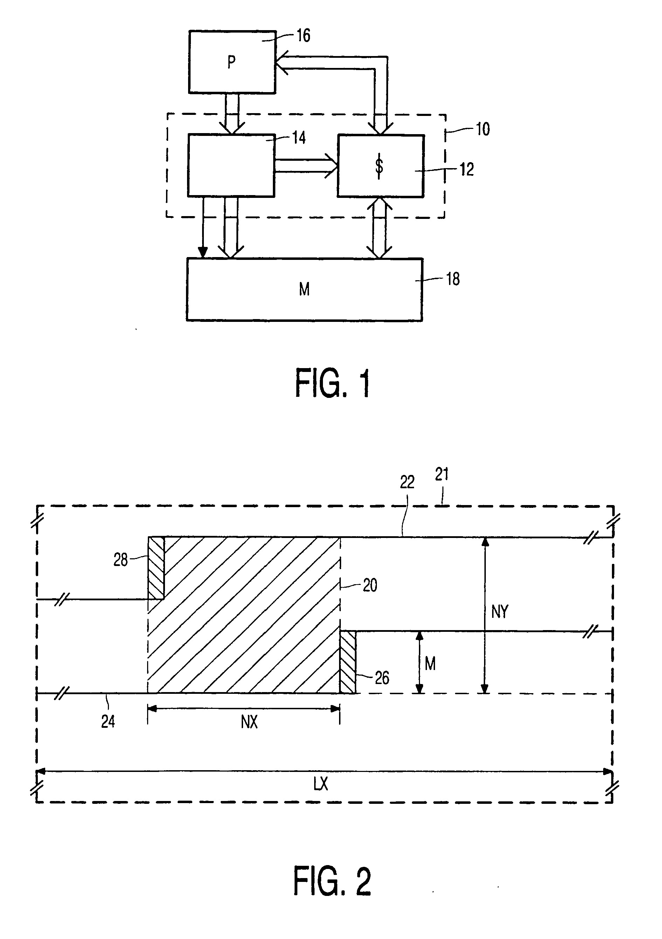

Figure 1 shows a device containing a cache memory 10, a processor 16 and a main memory 18. The cache memory 10 contains a cache control unit 14 and a memory unit 12. The processor 16 has an address output and a data input/output. The address output is coupled to the cache control unit 14. The cache control unit 14 has a local address output coupled to the memory unit 12 and an address and control output coupled to main memory 18. The memory unit 12 has a first data input/output coupled to the data input/output of the processor 16 and a second data input/output coupled to main memory 18.

In operation, pixel data for an image (e.g. a camera image received in a television apparatus) is stored in main memory 18. The processor 16 processes this pixel data. In case the processor 18 has to read pixel data, the processor 18 generates memory addresses that address pixel data. Cache control unit 14 receives these addresses, determines the address where the data is stored in cache memory unit 12 and applies that address to memory unit 12, which supplies the pixel data to the processor 16.

If the addressed data is not stored in memory unit 12, cache control unit 14 addresses main memory 18, which returns the data to the memory unit 12, which in turn passes the data to the processor 16 and stores the data at an address indicated by the cache control unit 14. After storing this data in the memory unit 12, the data that was previously stored at this addressed in the memory unit is no longer available from the memory unit 12.

An image is represented in memory as a collection of pixel-data associated with respective (x,y) coordinates. Typically, the address A where pixel data associated with coordinates (x,y) is stored can be expressed as

$$A = A0 + F*(x + LX*y),$$

where A0 is a base address, LX is the size of the image in the X direction and F is the number of address locations occupied per pixel.

Many image processing programs access pixel data in a sliding window of pixels. Such a window has a size of for example 8 pixels vertically (in the y-direction) and 8 pixels horizontally (in the x-direction). Access to the image for one specific purpose in a program is restricted to the pixels in the window at any one time. During processing, the window is scanned over the image, typically in successive horizontal scans from left to right over the image, the y-position of the window incrementing from one scan to the next.

Figure 2 shows an example of a window 20 in an image 21. The window 20 is NX pixels wide in the x-direction and NY pixels high in the Y direction. After completion of each scan (when the window reaches the right boundary of the image 21), the window is moved M pixels down in the Y direction.

In an example of an algorithm for finding motion vectors for compression of the image, the algorithm compares the pixels from a 4 times 8 (Bx=4, By=8) block of pixels with pixels from a window of 56 times 10 pixels (Nx=56, Ny=10). Thus, at a given position of the 4x8 block, access to the image is limited to a 10x56 window. After considering one 4x8 block, a new block is considered, 8 positions in the x-direction to the right of the old block. This involves access to pixels in a window that is 8 positions to the right of the old window. This is repeated a number of times so that the window is scanned along the x-direction. After each scan, the window is moved a block of M=4 down and the process is repeated.

In the device pixel data from NY rows of pixel data is validly stored in the cache memory 12, be it that a number of those rows is not complete in the cache memory 12. That is, the cache memory 12 contains valid pixel data from as many rows of pixels from the image 21 as there are rows in the window 20, from the earliest row 22 in the window 20 to the latest row 24 in the window 20.

When the window is moved in the x-direction, only the pixel data for the lower right corner 26 of the window 20 is not yet in the cache memory 12. This concerns data for M rows from the image, i.e. as many rows as the window is moved down between two horizontal scans. The data for pixels in these rows at x-positions at the right of the window 20 will be fetched when the window moves. At the same time, it is known that the data for M rows at the upper left corner 28 of the window will not be accessed any more. Hence, the memory locations in the memory unit 12 of the cache 10 that are used for the data from the rows at the upper left corner may be made available for storing other data from main memory 18.

Thus, addresses used to store pixel data from a number of rows in the same column of the image will be made available for reuse. Note that for all but the upper row these addresses will be made available for reuse before all of the cache addresses used for pixel data from preceding rows have been made available for reuse.

The data loaded into cache memory 10 for the lower left corner in turn will be no longer needed after the window 20 has advanced downward over (NY-M) rows and to the right over Nx columns of the image. At that time, the memory addresses in memory unit 12 can again be made available for reuse to store other data.

In case (NY-M) is not an integer multiple of M (the block size with which the window 20 is moved down after each horizontal scan), a first part of the different cache addresses that are used in the same scan to load data for different rows in the lower right corner will be made available for reuse during a first horizontal scan. A second part of these different cache addresses will be made available during a second horizontal scan that follows the first scan. In particular, when i*M<NY-M<(i+1)*M (i integer), the addresses used for the upper NY-M-i*M pixel rows at the lower right corner of the window 20 will be made available for reuse i scans after loading and the addresses used for the remaining rows will be made available for reuse i+1 scans after they were loaded.

Preferably the locations made available (used for data at the upper left corner of the window 28) are used for the data for the locations at the lower right corner 26 of the window. This means that data for pixels that are displaced from one another by a vector (NX,NY) will be stored at the same address in cache memory 10. In this case, the cache control unit 14 must translate the main memory addresses for these locations to an appropriate address in memory unit 12. From the X,Y coordinate of a pixel in the image, for example, the cache control unit 14 may compute a cache address Acache from

$$Acache = B0 + F*\{ (X+LX*Y) \bmod (NX+(NY-M)*LX) \}$$

(B0 is a base address and "mod" is the modulo function: if a= n mod m then a is a number greater than or equal to zero and less than m so that n=a+m*i, i being an integer). With such an address computation, the cache addresses for column of M pixels at the upper left of the window 20 will be the same as the cache address for a column of M pixels at the lower right of the window 20.

In terms of the main memory address Amain of the pixel data (where Amain=A0+F*(X+LX*Y)), the cache control unit 14 can compute the cache address according to

$$Acache = B0 + (Amain-A0) \bmod F*(NX+(NY-M)*LX)$$

However, because it is known that the window 20 is scanned in small steps, the cache control unit does not need to compute the "mod" function anew each time. If it is known that the main memory address Amain(UL) of pixel data in the upper left corner of the window 20 is given by

$$Amain(UL) - A0 = C0 + (Amain(UL)-A0) \bmod F*(NX+(NY-M)*LX)$$

then the cache addresses Acache(XY) for the other pixel coordinates XY in the window are given by

$$Acache(XY) = (Amain(XY)-A0) + D$$

where

$$D = C0 \quad \text{if } Amain(XY)-A0 < C0+F*(NX+(NY-M)*LX)$$

$$D = C0-F*(NX+(NY-M)*LX)$$

otherwise

F*(NX+(NY-M)*LX) is a fixed number for all pixels. As a result Acache can be computed using additions and/or subtractions and a test whether the first or the second value for D should be used. Each time the window 20 is advanced, C0 should be predetermined, but this also requires only additions and/or subtractions plus a test. Consequently, the computation of Acache in the cache control unit 14 can be implemented using simple arithmetic circuits.

In preparation for scanning the window 20 along the image 21, the processor 16 sends the cache control unit 14 information about the image size, the window size (NX,NY) and the block size (M) by which the window 20 is advanced between successive scans. For example, the processor may send F*(NX+(NY-M)*LX) to the cache control unit 16, together with information about the base address A0. The cache control unit 14 uses this information to control reuse of addresses in the cache memory. Of course in a dedicated processor, where these numbers are always the same, programming of the cache control unit 14 can be fixed in advance.

Conversion of the addresses to addresses for the memory unit 12 may be performed by the processor 16 instead of by the cache control unit 14.

Instead of addressing the pixels in the window 20 by their memory address, the processor 16 can also address the pixels by their position relative to the window. In this case, the address computation is similar, but with different offsets.

In one embodiment the processor 16 explicitly signals movement of the window 20 to the cache control unit, so that the cache control unit can fetch the pixel data for the lower right corner 26 and make the addresses for the upper right corner 28 available for reuse. Alternatively, the cache control unit 14 may detect addressing of pixels in the lower right corner 26 and respond to that detection by making addresses from the upper left corner available for reuse and fetching data. In yet another alternative, the cache control unit 14 may prefetch data for pixels to the right of the lower right corner 26 upon detection of addressing of the pixels in the lower right corner 26 or explicit signalling of movement of the window 20. Thus, the processor 16 will not encounter cache misses.

Instead of placing the data for the lower right corner 26 in the memory unit 12 at the addresses of the upper right corner, the cache control unit 14 may merely mark these addresses as "available for reuse" so that these addresses may be used for caching other data (e.g: not from the image) or for other processes running in parallel with the process that uses the window. In this case one preferably uses an associative cache or an n-way set associative cache. The invention makes it possible to occupy a minimum of space in the cache with the window.

Of course, the invention is not limited to the specific window and block size displayed in figure 2 or to scanning from left to right of the image and then from bottom to top. This will affect the data that is made available for reuse in an obvious way. For example, scans that load pixel data from memory from right to left in the image may be used (addresses for pixels from a vertical block in the upper right corner made available for reuse), or scans from bottom to top displaced from one another from right to left (addresses for pixels from a horizontal blocks in the upper left corner made available for reuse).

Although the invention has been described for reading from the cache memory 10, the invention can also be used in case the processor 16 writes to the cache memory. When the processor 16 writes to cache memory 10, the cache control unit 14 may follow a "copy back" strategy, that is, it may write back data from an address in the cache memory unit 12 to main memory 18 when that address is made available for reuse, in particular if that address has been overwritten by the processor 16. When the window 20 is moved, the cache control unit 14 therefore writes back pixel data for a number of rows 28 in the upper left corner of the window 20, before reusing these addresses for example for the pixels at the lower right corner 26 of the window 20.

**Claims**

1. A device comprising

    - a processor (16) programmed for accessing data-items from a matrix of rows and columns of data-items, access being constrained to a window (20) that is moved in successive scans along a row direction, each scan at a successive position along a column direction,
    - a cache memory (12) arranged for caching data-items from a bundle of rows of data-items, the cache memory (12) being arranged for making a location used for a first data-item (28) from an earliest cached row of the bundle available for reuse when the window moves along the row direction, and fetching a second data item for a latest cached row into die cache memory (12),

    wherein the earliest and the latest row are the earliest and latest row of the window, the position of the first data-item along the row direction of the matrix trailing the position of the second data-item (26) along the row direction of the matrix, wherein each scan at a successive position along the column direction is offset from the previous scan by a number of rows (M) which is less than a number of rows (NY) in the cached bundle of rows, and wherein the cache memory is arranged to cache a newly fetched data-item until the window has advanced a distance (NY-M) in the column direction.

2. A device according to Claim 1, wherein the second data-item (26) replaces the first data-item (28) in the cache memory (12).

3. A device according to Claim 1, wherein when the processor (16) advances the window (20) between directly successive scans, the processor (16) advances the window (20) in a column direction by a block of at least two rows at a time, the method comprising making first group of locations used for first data-items from an earliest group of at least two cached rows of the bundle available for reuse, and fetching second data items for a latest group of at least two cached rows into the cache memory, where the earliest and latest group have the size of a block and extend towards each other starting from a top and bottom of the window respectively.

4. A device according to Claim 3, wherein a height of the window (NY) is not an integer factor of a height of the block.

5. A method of caching data-items for access that is restricted to a sliding window (20) of data-items from a two-dimcnsional Matrix of rows and columns of data-items, the method comprising

- successive scans of the window (20) along a row direction, each scan at a successive position along a column direction,
- caching data-items from a bundle of rows of data-items in a cache memory,
- when the window moves along the row direction, making a location used for a first data-item (28) from an earliest cached row of the bundle available for reuse, and fetching a second data item (26) for a latest cached row into the cache memory, wherein the earliest and the latest row are the earliest and latest row of the window, the position of the first data-item (28) along the row direction of the matrix trailing the position of the second data-item (26) along the row direction of the matrix, and wherein each scan at a successive position along the column direction is offset from the previous scan by a number of rows (M) which is less than a number of rows (NY) in the cached bundle of rows, and caching a newly fetched data-item until the window has advanced a distance (NY-M) in the column direction.

**Patentansprüche**

1. Vorrichtung, umfassend

- einen Prozessor (16), der dazu programmiert ist, auf Datenelemente aus einer Matrix aus Zeilen und Spalten von Datenelementen zuzugreifen, wobei der Zugriff auf ein Fenster (20) beschränkt ist, das in aufeinanderfolgenden Abtastungen entlang einer Zeilenrichtung bewegt wird, wobei jede Abtastung an einer folgenden Position entlang einer Spaltenrichtung stattfindet,
- einen Zwischenspeicher (12), der dazu eingerichtet ist, Datenelemente aus einem Zeilenpaket aus Datenelementen zwischenzuspeichern, wobei der Zwischenspeicher (12) dazu eingerichtet ist, einen Speicherort, der für ein erstes Datenelement (28) aus einer zu einem frühesten Zeitpunkt zwischengespeicherten Zeile des Pakets verwendet wird, zur Wiederverwendung verfügbar zu machen, wenn sich das Fenster entlang der zeilenrichtung bewegt, und ein zweites Datenelement für eine im Zwischenspeicher (12) zu einem spätesten Zeitpunkt zwischengespeicherte Zeile zu beschaffen,

wobei es sich bei der frühesten und spätesten Zeile um die früheste und späteste Zeile des Fensters handelt und die Position des ersten Datenelements entlang der zeilenrichtung der Matrix der Position des zweiten Datenelements (26) entlang der zeilenrichtung der Matrix nachläuft, wobei jede Abtastung an einer folgenden Position entlang der Spaltenrichtung zur vorigen Abtastung um eine Anzahl (M) an Zeilen versetzt ist, die kleiner ist als eine Anzahl (NY) an Zeilen in dem zwischengespeicherten Zeilenpaket, und wobei der Zwischenspeicher dazu eingerichtet ist, ein neu beschafftes Datenelement zwischenzuspeichern, bis das Fenster um einen Abstand (NY-M) in der Spaltenrichtung vorgerückt ist.

2. Vorrichtung nach Anspruch 1, wobei das zweite Datenelement (26) das erste Datenelement (28) im Zwischenspeicher (12) ersetzt.

3. Vorrichtung nach Anspruch 1, wobei, wenn der Prozessor (16) das Fenster (20) zwischen direkt aufeinanderfolgenden Abtastungen vorrücken lässt, der Prozessor (16) das Fenster (20) in einer Spaltenrichtung jeweils um einen Block von mindestens zwei Zeilen vorrücken lässt, wobei das Verfahren umfasst, eine erste Gruppe von Speicherorten, die für erste Datenelemente aus einer frühesten Gruppe von mindestens zwei zwischengespeicherten Zeilen des Pakets verwendet wird, zur Wiederverwendung verfügbar zu machen, und zweite Datenelemente für eine späteste Gruppe von mindestens zwei im zwischenspeicher zwischengespeicherten Zeilen zu beschaffen, wobei die früheste und späteste Gruppe die Größe eines Blocks haben und sich ausgehend von einer Ober- bzw. Unterseite des Fensters aufeinander zu erstrecken.

4. Vorrichtung nach Anspruch 3, wobei eine Höhe (NY) des Fensters kein ganzzahliger Faktor einer Höhe des Blocks ist.

5. Verfahren zum Zwischenspeichern von Datenelementen zum auf ein Gleitfenster (20) beschränkten Zugreifen auf Datenelemente aus einer zweidimensionalen Matrix aus Zeilen und Spalten von Datenelementen, wobei das Verfahren umfasst:

- aufeinanderfolgende Abtastungen des Fensters (20) entlang einer zeilenrichtung, wobei jede Abtastung an einer folgenden Position entlang einer Spaltenrichtung stattfindet,
- Zwischenspeichern von Datenelementen aus einem Zeilenpaket aus Datenelementen in einem Zwischenspeicher,

- wenn sich das Fenster entlang der zeilenrichtung bewegt, einen Speicherort, der für ein erstes Datenelement (28) aus einer zu einem frühesten Zeitpunkt zwischengespeicherten Zeile des Pakets verwendet wird, zur Wiederverwendung verfügbar zu machen, und ein zweites Datenelement (26) für eine im Zwischenspeicher zu einem spätesten Zeitpunkt zwischengespeicherte Zeile zu beschaffen,

- wobei es sich bei der frühesten und spätesten Zeile um die früheste und späteste Zeile des Fensters handelt, die Position des ersten Datenelements (28) entlang der Zeilenrichtung der Matrix der Position des zweiten Datenelements (26) entlang der Zeilenrichtung der Matrix nachläuft, und wobei jede Abtastung and einer folgenden Position entlang der Spaltenrichtung zur vorigen Abtastung um eine Anzahl (M) an Zeilen versetzt ist, die kleiner ist als eine Anzahl (NY) an Zeilen in dem zwischengespeicherten Zeilenpaket, und Zwischenspeichern eines neu beschafften Datenelements, bis das Fenster um einen Abstand (NY-M) in der Spaltenrichtung vorgerückt ist.

## Revendications

1. Dispositif comportant

- un processeur (16) programmé pour accéder à des éléments de données provenant d'une matrice de rangées et de colonnes d'éléments de données, l'accès étant restreint à une fenêtre (20) qui se déplace par balayages successifs le long d'une direction de rangée, chaque balayage s'effectuant à une position successive le long d'une direction de colonne,
- une mémoire cache (12) disposée de façon à mettre en mémoire cache des éléments de données à partir d'un faisceau de rangées d'éléments de données, la mémoire cache (12) étant disposée pour créer un emplacement utilisé pour un premier élément de données (28) provenant d'une rangée mise en mémoire cache le plus récemment du faisceau disponible pour réutilisation quand la fenêtre se déplace le long de la direction de rangée, et pour extraire vers la mémoire cache (12) un deuxième élément de données pour une rangée mise en mémoire cache le plus anciennement,

où la rangée la plus récente et la rangée la plus ancienne sont la rangée la plus récente et la rangée la plus ancienne de la fenêtre, la position du premier élément de données le long de la direction de rangée de la matrice talonnant la position du deuxième élément de données (26) le long de la direction de rangée de la matrice, où chaque balayage à une position successive le long de la direction de colonne est décalé par rapport au balayage précédent d'un nombre de rangées (M) inférieur à un nombre de rangées (NY) dans le faisceau de rangées mis en mémoire cache, et où la mémoire cache est disposée de façon à mettre en mémoire cache un élément de données nouvellement extrait jusqu'à ce que la fenêtre ait avancé d'une distance (NY-M) dans la direction de colonne.

2. Dispositif selon la revendication 1, où le deuxième élément de données (26) remplace le premier élément de données (28) dans la mémoire cache (12).

3. Dispositif selon la revendication 1, où, quand le processeur (16) fait avancer la fenêtre (20) entre des balayages se succédant directement, le processeur (16) fait avancer la fenêtre (20) d'un bloc d'au moins deux rangées à la fois dans une direction de colonne, le procédé comportant la création d'un premier groupe d'emplacements utilisés pour des premiers éléments de données provenant d'un groupe le plus récent d'au moins deux rangées mises en mémoire cache du faisceau disponible pour réutilisation, et l'extraction vers la mémoire cache de deuxièmes éléments de données pour un groupe le plus ancien d'au moins deux rangées mises en mémoire cache, le groupe le plus récent et le groupe le plus ancien ayant la taille d'un bloc et s'étendant l'un vers l'autre en partant respectivement d'un haut et d'un bas de la fenêtre.

4. Dispositif selon la revendication 3, où une hauteur de la fenêtre (NY) n'est pas un facteur entier d'une hauteur du bloc.

5. Procédé de mise en mémoire cache pour accès restreint à une fenêtre glissante (20) d'éléments de données provenant d'une matrice bidimensionnelle de rangées et de colonnes d'éléments de données, le procédé comportant

- des balayages successifs de la fenêtre (20) le long d'une direction de rangée, chaque balayage s'effectuant à une position successive le long d'une direction de colonne,
- la mise dans une mémoire cache d'éléments de données provenant d'un faisceau de rangées d'éléments de données,
- quand la fenêtre se déplace le long de la direction de rangée, création d'un emplacement utilisé pour un premier élément de données (28) provenant d'une rangée mise en mémoire cache le plus récemment du faisceau disponible pour réutilisation, et extraction vers la mémoire cache d'un deuxième élément de données (26) pour une rangée mise en mémoire cache le plus anciennement,

où la rangée la plus récente et la rangée la plus ancienne sont la rangée la plus récente et la rangée la plus ancienne de la fenêtre, la position du premier élément de données (28) le long de la direction de rangée de la matrice talonnant la position du deuxième élément de données (26) le long de la direction de rangée de la matrice, et
où chaque balayage à une position successive le long de la direction de colonne est décalé par rapport au balayage précédent d'un nombre de rangées (M) inférieur à un nombre de rangées (NY) dans le faisceau de rangées mis en mémoire cache, et mise en mémoire cache d'un élément de données nouvellement extrait jusqu'à ce que la fenêtre ait avancé d'une distance (NY-M) le long de la direction de colonne.

FIG. 1

FIG. 2

**EP 1 055 175 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5602984 A